# EUROPEAN PATENT SPECIFICATION

(11) **EP 0 414 330 B1**
(45) Date of publication and mention of the grant of the patent: **08.12.1993**
(21) Application number: 90202274.8
(22) Date of filing: 24.08.1990
(51) Int. Cl.: A01G 31/00

(54) **Plant pot for substrate culture**
Pflanzentopf für die Substratkultur
Pot de plantes pour la culture sur substrat

(30) Priority: 24.08.1989 NL 8902138
(43) Date of publication of application: 27.02.1991
(73) Proprietor: Rockwool/ Grodan B.V., NL-6074 NH Melick-Herkenbosch (NL)
(72) Inventor: Van Gorkom, Johannes Cornelis Petrus Maria, NL-4819 CX Breda (NL)
(74) Representative: Prins, Hendrik Willem

(56) References cited:
- EP-A- 0 277 397
- GB-A- 2 106 764
- NL-A- 8 502 065
- US-A- 3 830 015

## Description

The present invention relates to a plant pot for substrate culture in the upper surface whereof is located an opening wherein a plant can be placed and consisting of water-absorbent material, for example an inorganic material such as rockwool. Such a plant pot is known from EP-A-0 176 134. It is applied for the further growth of a germinating plant which is placed for this purpose in the opening located in the upper surface of the plant pot.

Furthermore, EP-A-0 176 134 describes a plant substrate of which the bottom surface is provided with one or more grooves opening in the two side surfaces. However, grooves are not internal cavities.

During breeding the plant pot is normally placed on a ground over which a quantity of oxygen-rich water with the necessary nutrients is periodically directed according to the so-called ebb and flow system. Such a ground is normally formed by a concrete floor over which the water is guided. The absorptive capacity of the plant pot material is so great that this becomes water-saturated over a considerable part of its height. Besides oxygen from the air the plant takes up oxygen from the water via its roots. The oxygen content of the water drawn up into the plant pot therefore decreases. When the oxygen content falls below a particular threshold value the growth rate of the green parts of the plant begins to diminish (growth stagnation) and stagnation occurs in root growth. This problem occurs especially during the colder, darker seasons when the plant absorbs only a little water because of limited evaporation. In this period it can take several days, for example, before the plant takes so much water from the plant pot that irrigation has to take place again. At the end of this period, however, the oxygen content of the water in the plant pot has already fallen well below the value necessary for normal growth of the plant so that the mentioned growth inhibition occurs.

It is noted that this problem occurs either to a lesser degree or not at all during the warmer seasons. Because of the great evaporation which occurs during this period irrigation has to be carried out quite frequently to keep the plant pot sufficiently moist. Fresh water with a proportionally large amount of oxygen is continually added thereby so that the oxygen content remains at the required level.

When, however, as mentioned above, the water evaporates only slowly, replacing of the several day old, oxygen-poor water in the plant pot with fresh water could be considered. This would then have to be supplied on the top side of the plant pot. Various factors gives rise however to practical drawbacks. For example, the plant rooted in the plant pot screens a large portion of the top part of the plant pot relative to the supplied overhead irrigation water. It has therefore been found not possible to carry fresh, oxygen-rich water into the plant pot by overhead irrigation.

The object of the invention therefore is to provide a plant pot of the type mentioned in the preamble which does not have these drawbacks. This object is achieved in that according to a first embodiment the plant pot has one or more internal cavities being closed off toward the upper surface and having at least one cavity opening onto a side surface or onto a bottom surface, or in that according to a second embodiment the plant pot has one or more internal cavities closed on all sides. Each cavity forms an air chamber into which air can enter as a result of the porosity of the plant pot material. A part of the roots can thereby remain in contact with the air while another part of the same roots is in contact with water. The oxygen extracted from the air by the relevant root parts can be directly supplemented from outside. A further advantage of the cavities according to the invention lies in the proportionally high relative humidity of the air located therein. Since the cavity is enclosed by moist walls, this relative humidity has a value of 80% to 90% which ensures optimal growth. The maintenance of the correct relative humidity is of great importance particularly with very young and therefore vulnerable plants. The plant pot according to the invention is therefore very suitable for application in nurseries.

According to a preferred embodiment provision is made that the cavities open onto the bottom surface of the plant pot. When the water level is low enough, fresh, oxygen-rich air can therefore enter the cavities via the bottom surface of the plant pot.

Further, if the cavities are displaced relative to the opening in the upper surface the cavities on the one side and the opening on the other can overlap mutually in the vertical height of the plant pot.

The invention also relates to plant pots provided with a bottom surface with raised and recessed portions. With these plant pots the best effect is achieved if the cavities open into the recessed portions.

Finally, provision can be made that the cavity is closed on all sides. Such a plant pot can be obtained by first manufacturing two plant pot halves for assembly, by arranging a cavity on one or both of the adjoining surfaces for assembly and by thereafter assembling the plant pot halves.

The invention will subsequently be further elucidated with reference to several embodiments.
Figure 1 shows a first embodiment of the plant pot in cross section;
figure 2 shows a perspective view from below of the plant pot according to figure 1;
figure 3 shows a second embodiment of the plant pot in cross section;
figure 4 shows a third embodiment of the plant pot in perspective from below.

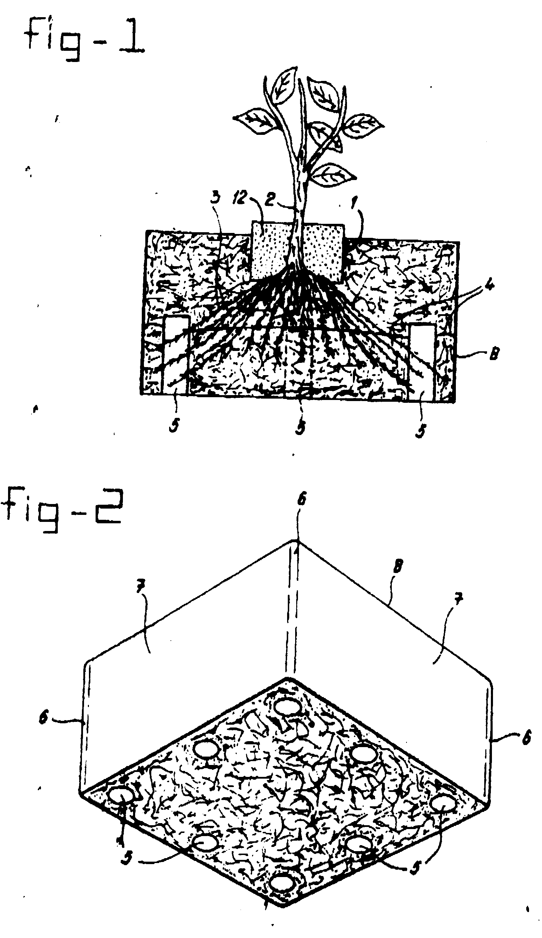

The plant pot of water-absorbent material, for example rockwool, depicted in section in figure 1 has the form of a parallelepiped in the upper part whereof a cavity 1 is provided wherein is placed a plug 12 of the same water-absorbent material with a plant 2. The roots 3 of the plant 2 spread from the plug 12 outward through the material of the plant pot, wherein a part of the roots extends into the region below the level to which water is drawn up into the plant pot. This water level is designated schematically by the line 4. From the bottom surface of the plant pot cavities extend in the form of holes 5. As a result of these holes 5 a portion of the roots 3 is in contact with oxygen-rich air with a proportionally high relative humidity. Optimal growth of the plant is thereby stimulated while root rot is countered.

As depicted, the roots 3 run only partly through the holes 5. It can also occur here that when a root has followed such a hole 5 it will continue to grow further entirely in that hole 5 without again penetrating into the material of the plant pot.

As shown in figure 2, a hole 5 is provided in each case preferably at each corner 6 as well as in the middle of each side of the plant pot. In known manner the plant pot can further be provided on the outside with an envelope 8 of plastic foil. This plastic foil has the purpose of preventing the roots 3 from growing out at the sides 7.

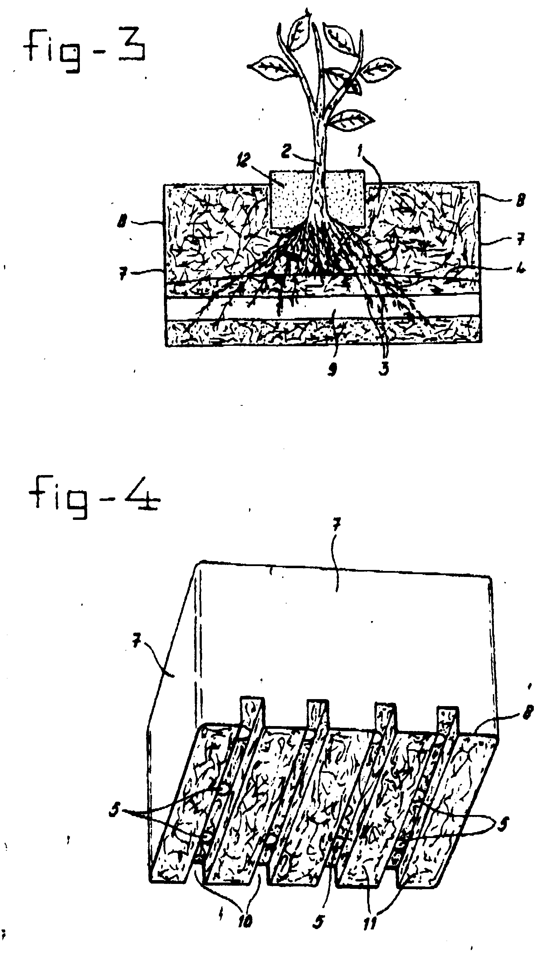

In the embodiment according to figure 3 the cavities 9 are arranged in the form of horizontally running channels 9. These channels 9 run preferably from the one side surface 7 to the opposite side surface 7. As shown, the roots 3 also run in this embodiment partly through the channel 9 wherein mainly air will be present.

Finally, a plant pot is depicted in figure 4 the underside whereof is provided with recessed portions 10 and raised portions 11. With such a plant pot the holes 5 are preferably arranged in the recessed portions 5 so that they are readily accessible for the surrounding air.

Finally, it is also noted that all holes 5 can run through in an upward direction so far that they overlap the opening 1 wherein the plant 2 is placed in vertical direction of the plant pot. The presence of the holes 5 thereby need form no obstacle whatever to making the opening 1 deeper, should this be required in view of the sort of plant.

## Claims

1. Plant pot for substrate culture, in the upper surface whereof is located an opening wherein a plant can be placed and consisting of water-absorbent material, for example an inorganic material such as rockwool, **characterized** **in that** the plant pot has one or more internal cavities being closed off toward the upper surface and having at least one cavity opening onto a side surface or onto a bottom surface.

2. Plant pot for substrate culture, in the upper surface whereof is located an opening wherein a plant can be placed and consisting of water-absorbent material, for example an inorganic material such as rockwool, **characterized** **in that** the plant pot has one or more internal cavities closed on all sides.

3. Plant pot as claimed in claim 1, **characterized in** **that** the cavities open onto the bottom surface of the plant pot.

4. Plant pot as claimed in claim 1 or 3, **characterized** **in that** at least one cavity opens one side surface of the plant pot.

5. Plant pot as claimed in claim 4, **characterized in that** at least one cavity opens onto two side surfaces.

6. Plant pot as claimed in any of the preceding claims 1, 3-5, provided with a bottom surface with raised and recessed portions, **characterized in that** the cavities open into the recessed parties.

7. Plant pot as claimed in any of the preceding claims 1-6, **characterized in that** the cavities are displaced relative to the opening in the upper surface.

8. Plant pot as claimed in any of the preceding claims 1-7, **characterized in that** a cavity is provided close to each corner point and close to the middle of each side.

9. Plant pot as claimed in any of the preceding claims 1-8, **characterized in that** the cavities on the one side and the opening on the other overlap mutually in vertical direction of the plant pot.

10. Method for manufacturing a plant pot as claimed in claims 1-9, **characterized in that** two plant pot halves for assembly are manufactured, that at least one cavity is arranged on one or both adjoining surfaces for assembly and that thereafter the plant pot halves are assembled.

## Patentansprüche

1. Pflanzentopf für eine Substratkultur, in dessen oberer Oberfläche eine Öffnung ausgebildet ist, in welcher eine Pflanze plaziert werden kann, wobei der Pflanzentopf ein wasserabsorbierendes Material aufweist, beispielsweise ein anorganisches Material wie Steinwolle, dadurch gekennzeichnet, daß der Pflanzentopf einen oder mehrere innere Hohlräume aufweist, welche zu der oberen Oberfläche hin abgeschlossen sind und mindestens eine Hohlraumöffnung auf einer Seitenfläche oder auf einer Bodenfläche aufweisen.

2. Pflanzentopf für eine Substratkultur, in dessen oberer Oberfläche eine Öffnung ausgebildet ist, in welcher eine Pflanze plaziert werden kann, wobei der Pflanzentopf ein wasserabsorbierendes Material aufweist, beispielsweise ein anorganisches Material wie Steinwolle, dadurch gekennzeichnet, daß der Pflanzentopf einen oder mehrere innere Hohlräume aufweist, welche auf allen Seiten geschlossen sind.

3. Pflanzentopf nach Anspruch 1, dadurch gekennzeichnet, daß die Hohlräume auf der Bodenfläche des Pflanzentopfs geöffnet sind.

4. Pflanzentopf nach Anspruch 1 oder 3, dadurch gekennzeichnet, daß mindestens ein Hohlraum auf einer Seitenfläche des Pflanzentopfs geöffnet ist.

5. Pflanzentopf nach Anspruch 4, dadurch gekennzeichnet, daß mindestens ein Hohlraum auf zwei Seitenflächen des Pflanzentopfs geöffnet ist.

6. Pflanzentopf nach einem der vorangehenden Ansprüche 1 oder 3 bis 5, wobei der Pflanzentopf mit einer Bodenfläche mit Vorsprungsabschnitten und Ausnehmungsabschnitten versehen ist, dadurch gekennzeichnet, daß die Hohlräume zu den Ausnehmungsabschnitten hin offen sind.

7. Pflanzentopf nach einem der vorangehenden Ansprüche 1 bis 6, dadurch gekennzeichnet, daß die Hohlräume relativ zu der in der oberen Oberfläche ausgebildeten Öffnung versetzt angeordnet sind.

8. Pflanzentopf nach einem der vorangehenden Ansprüche 1 bis 7, dadurch gekennzeichnet, daß jeweils ein Hohlraum in der Nähe von jeder der Ecken und ein Hohlraum in der Mitte von jeder der Seiten vorgesehen ist.

9. Pflanzentopf nach einem der vorangehenden Ansprüche 1 bis 8, dadurch gekennzeichnet, daß die Hohlräume auf der einen Seite und die Öffnungen auf der anderen Seite einander in Vertikalrichtung das Pflanzentopfs überlappen.

10. Verfahren zum Herstellen eines Pflanzentopfs nach den Ansprüchen 1 bis 9, dadurch gekennzeichnet, daß zwei aneinander zu montierende Pflanzentopfhälften hergestellt werden, wobei mindestens ein Hohlraum in einer der beiden zusammenzufügenden Montageflächen ausgebildet ist und danach die Pflanzentopfhälften zusammengefügt werden.

## Revendications

1. Pot pour plante destiné à la culture sur substrat, à la surface supérieure duquel est formée une ouverture dans laquelle une plante peut être placée et constitué d'un matériau absorbant l'eau, par exemple un matériau minéral tel que la laine de roche, caractérisé en ce que le pot pour plante a une ou plusieurs cavités internes fermées vers la surface supérieure et ayant au moins une ouverture de cavité à une face latérale ou à une face inférieure.

2. Pot pour plante destiné à la culture sur substrat, à la surface supérieure duquel est formée une ouverture dans laquelle une plante peut être placée et formé d'un matériau absorbant l'eau, par exemple d'un matériau minéral tel que la laine de roche, caractérisé en ce que le pot pour plante a une ou plusieurs cavités internes fermées de tous les côtés.

3. Pot pour plante selon la revendication 1, caractérisé en ce que les cavités débouchent à la face inférieure du pot pour plante.

4. Pot pour plante selon la revendication 1 ou 3, caractérisé en ce qu'une cavité au moins débouche sur une face latérale du pot.

5. Pot pour plante selon la revendication 4, caractérisé en ce qu'une cavité au moins débouche sur les deux faces latérales.

6. Pot pour plante selon l'une quelconque des revendications précédentes 1 et 3 à 5, ayant une surface inférieure comprenant des parties en saillie et en creux, caractérisé en ce que les cavités débouchent dans les parties en creux.

7. Pot pour plante selon l'une quelconque des revendications précédentes 1 à 6, caractérisé en ce que les cavités sont décalées par rapport à l'ouverture formée à la surface supérieure.

8. Pot pour plante selon l'une quelconque des revendications précédentes 1 à 7, caractérisé en ce qu'une cavité est formée à proximité de l'emplacement de chaque coin et près du milieu de chaque côté.

9. Pot pour plante selon l'une quelconque des revendications précédentes 1 à 8, caractérisé en ce que les cavités d'un premier côté et l'ouverture de l'autre côté se recouvrent mutuellement dans la direction verticale du pot.

10. Procédé de fabrication d'un pot pour plante selon l'une quelconque des revendications 1 à 9, caractérisé en ce que deux moitiés de pot pour plante destinées à être assemblées sont fabriquées, en ce qu'une cavité au moins est formée dans l'une au moins des deux faces adjacentes d'assemblage, et les moitiés du pot sont ensuite assemblées.
